# FASCICULE DE BREVET EUROPEEN

(11) **EP 3 545 790 B1**
(45) Date de publication et mention de la délivrance du brevet: **04.09.2024**
(21) Numéro de dépôt: 19150624.5
(22) Date de dépôt: 20.02.2008
(51) Int. Cl.: A45D 40/00, A45D 40/26, A46D 1/08, B29L 31/00, A46B 9/02, B33Y 10/00, B29C 64/153, B22F 10/12, B22F 10/28, B22F 10/80, B33Y 80/00, B33Y 50/00, B29C 35/08, B22F 3/105

(54) **APPLICATEUR ET EMBALLAGE COMPRENANT CET APPLICATEUR**
APPLIKATOR UND BEHÄLTER MIT DIESEM APPLIKATOR
APPLICATOR AND CONTAINER INCLUDING SAID APPLICATOR

(30) Priorité: 21.02.2007 FR 0753416
(43) Date de publication de la demande: 02.10.2019
(62) Demande divisionnaire de: 08762134.8
(73) Titulaire: Chanel Parfums Beauté, 92200 Neuilly-sur-Seine (FR)
(72) Inventeur: SALCIARINI, Christian, 77860 Couilly Pont aux Dames (FR)
(74) Mandataire: Santarelli

(56) Documents cités:
- EP-A1- 1 070 468
- EP-A1- 1 611 817
- US-A1- 2007 033 759

## Description

La présente invention concerne un applicateur de produit cosmétique et un emballage comprenant cet applicateur.

Elle s'applique en particulier à la fabrication d'un applicateur de produit cosmétique pour des fibres kératiniques, notamment des cils ou des sourcils, pour la peau, notamment des paupières, des lèvres ou des joues, ou encore pour des ongles. Le produit cosmétique peut être notamment liquide, pâteux ou pulvérulent.

On connaît déjà dans l'état de la technique un premier type de procédé de fabrication d'applicateur, selon lequel on fabrique puis on assemble différents composants élémentaires de l'applicateur. Lorsque, par exemple, l'applicateur est une brosse à mascara, on fabrique séparément, d'une part, des poils de la brosse et, d'autre part, une âme métallique de cette brosse. Puis, on rapporte les poils entre deux tiges métalliques de l'âme et on fixe les poils dans l'âme en torsadant les tiges, de façon que les poils se répartissent en hélice autour de l'âme.

Ce type de procédé de fabrication comporte donc une première étape de fabrication des différents composants élémentaires de l'applicateur et une seconde étape d'assemblage des composants élémentaires entre eux.

On connaît également dans l'état de la technique un second type de procédé de fabrication d'applicateur, permettant d'éviter notamment l'opération d'assemblage du procédé ci-dessus.

Selon ce second type de procédé, on moule l'applicateur de façon que ses différents composants soient venus de matière les uns avec les autres. A cet effet, tout d'abord, on réalise un moule ayant une forme complémentaire de celle de l'applicateur, par exemple par empilement de lamelles métalliques de contours appropriés. Puis on introduit dans le moule, par exemple par injection, de la matière dans un état permettant son écoulement dans le moule. Enfin, une fois cette matière solidifiée à l'intérieur du moule, on démoule le produit solidifié. Lorsque, par exemple, l'applicateur est un peigne applicateur de mascara comprenant une âme portant des dents d'application de mascara, ce second type de procédé permet de mouler en une seule étape l'âme et les dents.

Toutefois, la nécessité de pouvoir démouler l'applicateur limite la complexité de la forme de cet applicateur, notamment en interdisant des formes d'applicateur en contre-dépouille.

Par ailleurs, la réalisation d'un moule étant relativement coûteuse, on diversifie peu les formes des applicateurs afin de limiter le nombre de moules différents à réaliser.

Le document EP 1 611 817 A1 divulgue un dispositif d'application d'un produit sur les fibres kératiniques, comprenant un support s'étendant selon un axe longitudinal et des dents réalisées de manière monolithique avec le support, ces dents se raccordant à un même côté du support.

Ceci empêche d'envisager la production d'une variété d'applicateurs adaptée à la diversité des consommatrices, ces dernières ayant des cils plus ou moins longs ou plus ou moins durs.

La présente invention a pour but de produire un applicateur à l'aide de moyens relativement simples et peu coûteux permettant d'envisager une grande variété de formes d'applicateur, notamment des formes relativement complexes.

A cet effet, l'invention a pour objet un applicateur de produit cosmétique, l'applicateur étant réalisé dans un matériau compatible avec le produit cosmétique, où
- on élabore un modèle numérique de l'applicateur,
- on conditionne le matériau sous une forme brute pouvant s'écouler, et
- on solidifie le matériau sous forme brute par tranches définies à partir du modèle numérique.

On entend par « matériau compatible avec le produit cosmétique » un matériau choisi de façon appropriée pour que le produit cosmétique et le matériau de l'applicateur ne se dégradent pas mutuellement, ou très lentement en considérant la durée de vie prévue de l'applicateur ou du produit cosmétique.

Comme un procédé de moulage, le procédé selon l'invention permet de fabriquer différents composants d'un applicateur en une seule étape, ces différents composants étant venus de matière les uns avec les autres.

Par contre, le procédé selon l'invention ne requiert pas de fabriquer un moule, si bien que l'on peut facilement et à peu de frais diversifier les formes des applicateurs, ces formes n'étant pas imposées par des moules. On peut ainsi produire, si on le souhaite, un très grand nombre de petites séries d'applicateurs différents.

De plus, le procédé selon l'invention permet de fabriquer un applicateur de forme relativement complexe, celle-ci pouvant être localement en contre-dépouille, aucune étape de démoulage n'interdisant une forme en contre-dépouille.

En outre, comme le matériau sous forme brute est solidifié par tranches, on obtient un applicateur présentant des irrégularités de surface, ce qui permet de charger davantage de produit cosmétique sur l'applicateur que si la surface était parfaitement lisse. Par ailleurs, dans le cas où le matériau sous forme brute est pulvérulent, l'applicateur présente alors une surface granulée, ce qui permet également de charger davantage de produit cosmétique.

Un procédé selon l'invention peut en outre comporter l'une ou plusieurs de caractéristiques suivantes.
- le matériau sous forme brute est liquide ou pulvérulent ;
- le matériau sous forme brute est susceptible d'être solidifié par photo-polymérisation, notamment au moyen d'une source de lumière comprenant un laser ;
- le matériau sous forme brute est susceptible d'être solidifié par frittage, notamment au moyen d'une source de chaleur comprenant un laser ;
- on place le matériau sous forme brute dans un réceptacle muni d'un support pour le matériau solidifié et on déplace le support par pas égaux à des épaisseurs des tranches définies à partir du modèle numérique ;
- le matériau sous forme brute comprend au moins un composant, mélangé le cas échéant avec un additif, ce composant étant choisi parmi une résine photopolymère, une résine de frittage, un métal et/ou un alliage de métaux ;
- l'applicateur est une brosse ou un peigne à mascara ;
- le procédé comporte les étapes successives suivantes : on identifie au moins une grandeur caractéristique d'un utilisateur de l'applicateur, par exemple la longueur d'un cil ou la forme du contour d'un oeil, on calcule au moins un paramètre de l'applicateur en fonction de cette grandeur caractéristique, on élabore le modèle numérique de l'applicateur conformément au paramètres calculés.

L'invention a pour objet un applicateur de produit cosmétique, selon la revendication 1, formant un élément d'un emballage prêt à la commercialisation, obtenu par un procédé tel que défini ci-dessus.

Les caractéristiques préférées de l'invention sont exposées dans les revendications dépendantes.

L'invention a encore pour objet un emballage de produit cosmétique comprenant un applicateur de ce produit, **caractérisé en ce que** l'applicateur est tel que défini ci-dessus.

L'invention sera mieux comprise à la lecture de la description qui va suivre, donnée uniquement à titre d'exemple et faite en se référant aux dessins dans lesquels :
- la figure 1 est une vue en élévation d'un emballage de produit cosmétique selon l'invention, partiellement en coupe ;
- la figure 2 est une vue schématique d'une installation pour la mise en oeuvre du procédé de fabrication d'un applicateur de produit cosmétique selon l'invention ;
- la figure 3 est une vue en perspective d'un applicateur de produit cosmétique qui ne fait pas partie de l'invention revendiquée;
- la figure 4 est une vue en coupe transversale, à échelle agrandie par rapport à la figure 3, de l'applicateur représenté sur la figure 3 ;
- la figure 5 est une vue de détail de la partie encadrée 5 de la figure 3 ;
- la figure 6 est une vue similaire à la figure 3 d'un applicateur qui ne fait pas partie de l'invention revendiquée;
- la figure 7 est une vue suivant la flèche 7 de l'applicateur de la figure 6 ;
- les figures 8 et 9 sont des vues similaires aux figures 6 et 7 d'un applicateur qui ne fait pas partie de l'invention revendiquée;
- la figure 10 est une vue en perspective d'un applicateur selon l'invention;
- les figures 11 et 12 sont des vues en perspective de lots d'applicateurs.

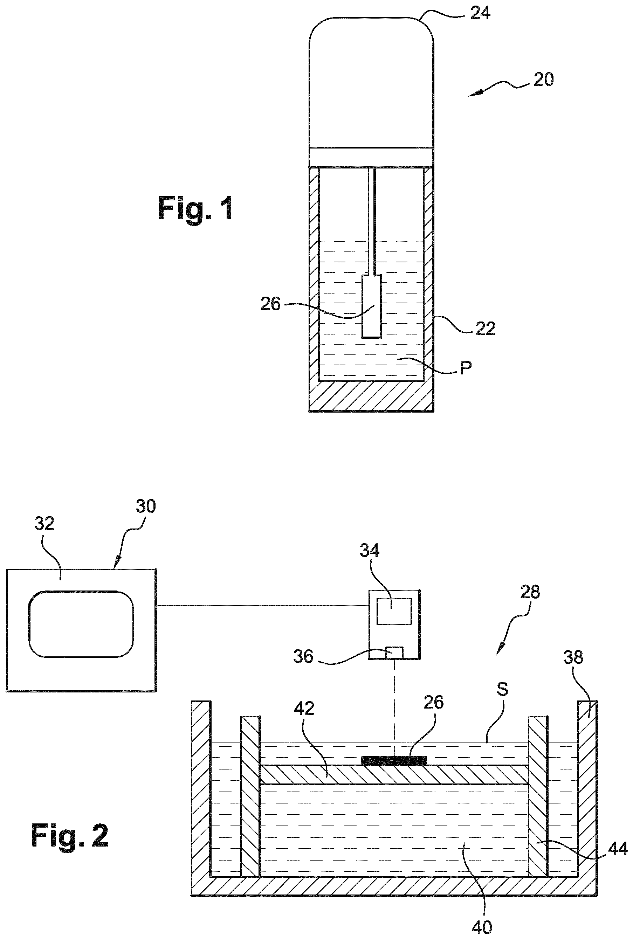

On a représenté sur la figure 1 un emballage de produit cosmétique, selon l'invention, désigné par la référence générale 20. Le produit cosmétique est par exemple un mascara.

L'emballage 20, prêt à être commercialisé, comprend un corps 22 fermé par un capuchon 24 portant un applicateur 26 selon l'invention. Le corps 22 contient le produit cosmétique. Bien entendu, l'applicateur 26 est en matériau compatible avec le produit cosmétique.

On désigne par applicateur un organe comprenant des éléments de chargement et d'application de produit cosmétique (également appelés dents, poils, etc.) portés par un support (également appelé âme, tige, etc.). L'applicateur 26 forme, par exemple, une brosse ou un peigne à mascara.

L'applicateur 26 est fabriqué conformément à un procédé selon l'invention au moyen d'une installation 28 schématisée sur la figure 2.

L'installation 28 est destinée plus particulièrement à mettre en oeuvre des étapes de stéréolithographie ou, en variante, des étapes de frittage.

L'installation 28 comprend des moyens 30 d'élaboration d'un modèle numérique de l'applicateur 26 comprenant, par exemple, un ordinateur classique 32 dans lequel est implanté un logiciel de conception assistée par ordinateur (CAO) connu en soi.

L'installation 28 comprend également un module de commande 34, par exemple de type automate programmable ou de type PC, destiné à piloter des moyens optiques comprenant une source laser 36.

Les moyens 30 et le module 34 sont reliés entre eux de façon connue en soi de façon à pouvoir transmettre le modèle numérique d'applicateur depuis l'ordinateur 32, vers le module de commande 34, par exemple dans un format standard tel que le format STL (STereoLitography). L'installation 28 comprend également un réceptacle 38 destiné à contenir un matériau sous une forme brute 40 pouvant s'écouler, en particulier sous une forme liquide ou pulvérulente.

Le matériau sous forme brute est destiné à être solidifié de façon à former l'applicateur 26.

L'applicateur 26 en cours de fabrication est porté par un support 42 logé dans le réceptacle 38 de façon à être immergé sous la surface libre S du matériau 40.

Le support 42 est déplaçable parallèlement à une direction sensiblement perpendiculaire à la surface S à l'aide de moyens classiques 44.

L'applicateur 26 est réalisé conformément au procédé de fabrication de l'invention de la façon suivante.

Tout d'abord, on élabore un modèle numérique de l'applicateur 26, par exemple à l'aide des moyens 30 de l'installation 28.
- Par ailleurs, on conditionne le matériau destiné à former l'applicateur 26 sous une forme brute pouvant s'écouler.

On notera que l'on peut utiliser, comme matériau sous forme brute, un matériau comportant une résine photopolymère, une résine de frittage, un métal et/ou un alliage de métaux.

Le métal ou l'alliage de métaux, de préférence sous forme de poudres métalliques, peuvent être choisis parmi le bronze, l'acier, le cobalt-chrome, le titane. L'utilisation d'un matériau comportant du métal est particulièrement intéressante pour la fabrication de l'applicateur, en raison notamment des propriétés ergonomiques, esthétiques et fonctionnelles du métal. Entre autres, la possibilité de conduire la chaleur ou l'électricité peut procurer de nouvelles fonctions à l'applicateur.

Le cas échéant, le matériau sous forme brute peut être mélangé avec d'autres composants tels qu'un additif et/ou un photo-initiateur.

Dans l'exemple illustré sur la figure 2, le matériau sous forme brute 40 est un liquide susceptible d'être solidifié par photo-polymérisation au moyen de la source laser 36 formant source de lumière.

Après avoir rempli le réceptacle 38 de matériau sous forme brute 40, on solidifie ce dernier par tranches définies à partir du modèle numérique. La source laser 36 polymérise le matériau 40 en étant pilotée de façon connue en soi par le module de commande 34.

Pour solidifier successivement les tranches d'applicateur, on déplace le support 42 par pas égaux à des épaisseurs des tranches définies à partir du modèle numérique. On pourra choisir par exemple des tranches d'épaisseur constante. Plus le nombre de tranches solidifiées augmente, plus le support 42 s'enfonce dans le matériau 40 de façon à permettre la solidification de la couche de matériau 40 s'étendant entre la surface S et la dernière tranche d'applicateur 26 solidifiée.

L'épaisseur des tranches peut être limitée à quelques nanomètres si bien que l'applicateur 26 fabriqué selon le procédé de l'invention peut être défini par des contours très précis.

L'applicateur 26 étant fabriqué par solidification de tranches successives, la forme de cet applicateur 26 peut être relativement complexe et présenter, au moins localement, des contours en contre-dépouille, ainsi que des évidements ou creux éventuellement non débouchant une fois l'applicateur 26 fini.

En variante, le matériau sous forme brute 40 peut être un matériau susceptible d'être solidifié par frittage, notamment à l'aide d'un laser formant une source de chaleur. Dans ce cas, on choisira de préférence un matériau sous forme brute pulvérulente.

Le procédé de fabrication selon l'invention permet d'obtenir un applicateur susceptible de former un élément de l'emballage 20 prêt à la commercialisation. En effet, on constate que l'applicateur 26 fabriqué conformément au procédé de l'invention présente des caractéristiques, notamment mécaniques, adaptées pour être l'utilisation de l'applicateur 26 polymérisé ou fritté dans l'emballage 20 destiné à être commercialisé.

Habituellement, dans l'état de la technique, les procédés de stéréolitographie ou de frittage sont utilisés pour la fabrication de prototypes ou d'éléments de haute technicité. Les prototypes sont des produits intermédiaires, destinés notamment à la fabrication d'un moule, ne présentant pas les caractéristiques, notamment mécaniques, des produits finis destinés à la commercialisation.

Or, le procédé de fabrication selon l'invention permet avantageusement de mettre en oeuvre des étapes de stéréolitographie ou de frittage pour obtenir des applicateurs, ces produits n'étant pas de haute technicité et formant des produits finis dont les caractéristiques sont adaptées à leur commercialisation.

Le procédé de fabrication selon l'invention permet de s'affranchir de l'utilisation d'un moule en mettant en oeuvre notamment des techniques de stéréolitographie ou de frittage utilisées dans l'état de la technique pour la fabrication d'un prototype destiné à la fabrication d'un moule.

Or, le procédé de fabrication selon l'invention permet d'obtenir directement un applicateur ayant des caractéristiques, notamment mécaniques, adaptées à son utilisation du fait que l'invention propose de conditionner le matériau habituellement utilisé pour la fabrication de l'applicateur sous une forme brute pouvant s'écouler adaptée aux techniques de stéréolitographie ou de frittage.

On notera que le procédé de fabrication ci-dessus peut comprendre préalablement des étapes en vue de la personnalisation de l'applicateur fabriqué, notamment les étapes suivantes :
- on identifie au moins une grandeur caractéristique d'un utilisateur de l'applicateur, par exemple la longueur d'un cil ou la forme du contour d'un oeil de l'utilisateur,
- on calcule au moins un paramètre de l'applicateur en fonction de cette grandeur caractéristique,
- on élabore le modèle numérique de l'applicateur conformément au paramètres calculés.

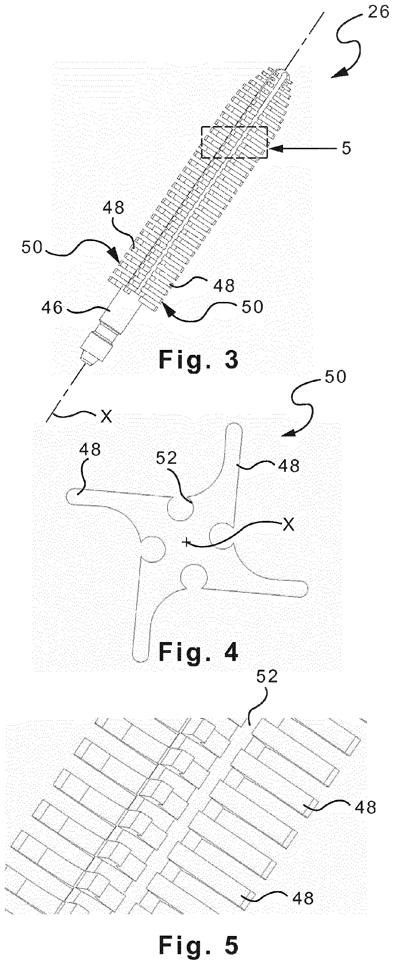

On décrira ci-dessous des exemples d'applicateurs 26 susceptibles d'être fabriqués conformément au procédé de l'invention, ceci en se référant aux figures 3 à 10.

Sur ces figures, les éléments analogues sont désignés par des références identiques.

Sur les figures 3 à 5, on a représenté un applicateur 26 qui ne fait pas partie de l'invention revendiquée. Cet applicateur 26 forme un peigne d'application de mascara.

L'applicateur 26 comprend une âme 46, de forme générale allongée le long d'un axe X, portant des dents 48 venues de matière avec cette âme 46.

Comme on peut le voir sur les figures 3 et 4, les dents 48 sont réparties en groupes 50. Les dents d'un même groupe 50 ont la même position axiale sur l'âme 46. Dans l'exemple illustré, un groupe 50 comprend quatre dents 48 espacées angulairement entre elles autour de l'âme 46 et de l'axe X (voir figure 4). Les dents 48 d'un même groupe 50 sont espacées angulairement entre elles suivant un pas angulaire d'environ 90°. Les différents groupes 50 sont espacés axialement entre eux d'un pas axial sensiblement constant.

L'âme 46 est munie de gorges 52, par exemple au nombre de quatre comme représenté sur la figure 4, formant des réservoirs de chargement de produit cosmétique. Chaque gorge 52, représentée plus en détail sur la figure 5, s'étend sensiblement axialement entre deux dents 48 successives angulairement des groupes 50.

On notera que les gorges 52 comportent une surface interne dont la section transversale est délimitée par une portion de cercle s'étendant sur plus de 180°.

Ainsi, le procédé selon l'invention permet d'obtenir des gorges 52 dont le contour de la surface interne, en contre-dépouille, n'aurait pas pu être obtenu par un procédé classique de moulage.

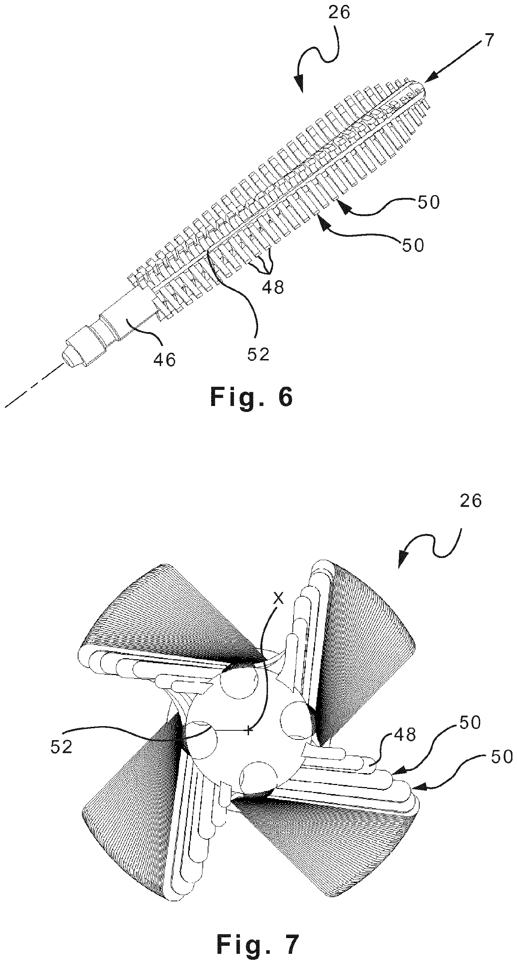

On a représenté sur les figures 6 et 7 un applicateur 26 qui ne fait pas partie de l'invention revendiquée.

A la différence du mode de réalisation précédent, les groupes 50 de dents 48 sont décalés angulairement entre eux suivant un pas de décalage angulaire sensiblement constant. Les gorges 52 s'étendent en hélice le long et autour de l'axe X.

La forme de cet applicateur 26 n'aurait pas non plus pu être obtenue par un procédé classique de moulage.

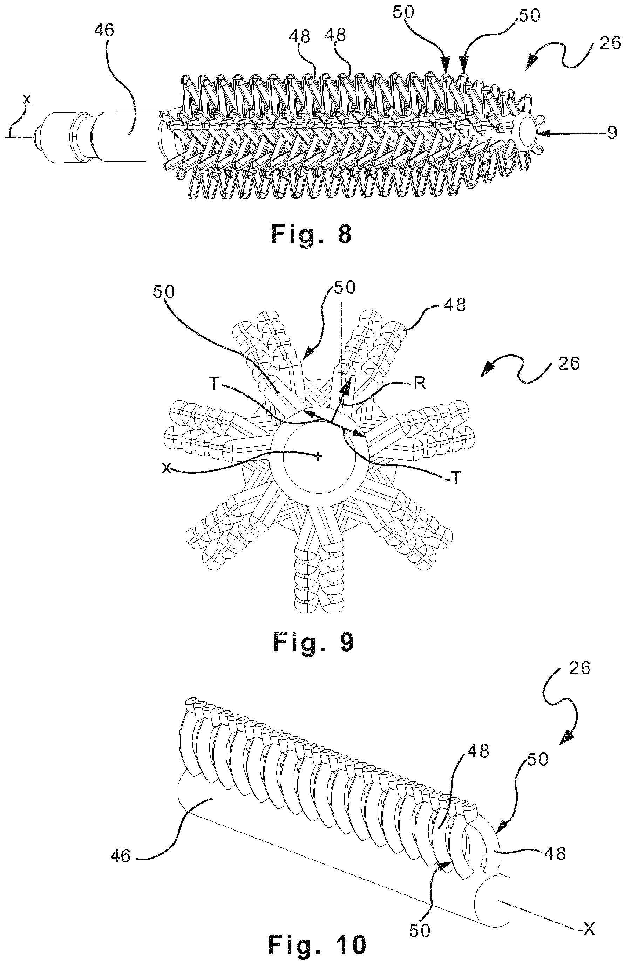

On a représenté sur les figures 8 et 9 un applicateur 26 qui ne fait pas partie de l'invention revendiquée.

Dans ce cas, l'applicateur 26 forme une brosse à mascara.

Dans ce mode de réalisation, les dents 48 s'étendent chacune conformément à une direction générale ayant une composante radiale R et une composante tangentielle T ou -T.

Les dents 48 d'un même groupe 50 ont toutes une composante tangentielle de même signe. Par contre, les dents de deux groupes 50 qui se succèdent présentent des composantes tangentielles de signes opposés.

Un tel agencement des dents 48 sur l'âme 46 forme un enchevêtrement de dents propice au chargement de produit cosmétique sur l'applicateur 26.

Ainsi, l'applicateur 26 selon le troisième mode de réalisation, fabriqué conformément au procédé selon l'invention, n'aurait pas pu être obtenu par un procédé classique de moulage.

On a représenté sur la figure 10 un applicateur 26 selon l'invention.

Dans ce cas, l'applicateur 26 forme un peigne d'application de mascara et chaque groupe 50 ne comporte qu'une seule dent 48.

Par ailleurs, les dents 48 s'étendent sensiblement parallèlement à un plan transversal de l'applicateur suivant une direction courbe. On notera que les courbures des dents 48 s'inversent alternativement d'un groupe 50 à l'autre.

Ainsi, le procédé selon l'invention permet d'obtenir un applicateur 26 tel que représenté sur la figure 10 qui n'aurait pas pu être obtenu par un procédé classique de moulage.

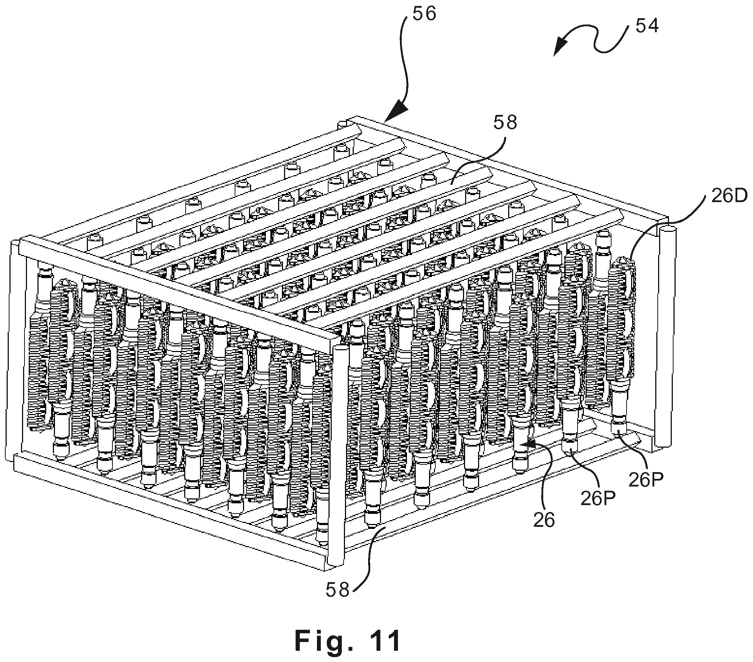

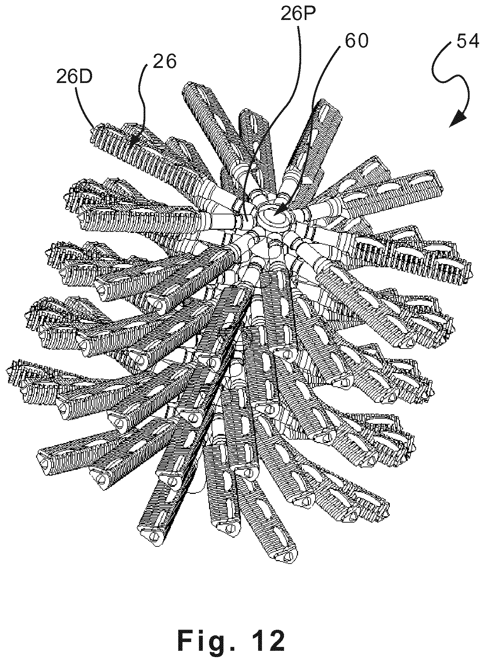

Sur les figures 11 et 12, on a représenté respectivement des premier et second modes de réalisation d'un lot 54 d'applicateurs.

Ce lot 54 est obtenu par un procédé de fabrication selon l'invention.

Les applicateurs 26 représentés sur les figures 11 et 12 forment, par exemple, des peignes d'application de mascara. Chaque applicateur 26 comprend une première extrémité, proximale 26P, et une seconde extrémité, distale 26D.

Le lot 54 selon le premier mode de réalisation représenté sur la figure 11 comprend un support 56 en forme générale de cage parallélépipédique comprenant deux faces opposées munies chacune de tiges 58 sensiblement parallèles.

Le lot 54 représenté sur la figure 11 comprend au moins deux rangées d'applicateurs 26 parallèles aux tiges 58, par exemple quatorze rangées comme cela est représenté. Les applicateurs d'une même première rangée sont disposés tête-bêche par rapport aux applicateurs d'une seconde rangée adjacente à la première, en considérant les extrémités proximales 26P et distales 26D des applicateurs.

Les extrémités proximales 26P des applicateurs 26 d'une même rangée sont reliées de façon détachable à une tige 58 commune.

Dans le lot 54 selon le second mode de réalisation représenté sur la figure 12, les applicateurs 26 sont reliés en grappes à une même tige 60 formant support. En effet, les extrémités proximales 26P des applicateurs 26 sont reliées de façon détachable, par leurs extrémités proximales 26P, à la tige 60.

Les applicateurs 26 s'étendent radialement par rapport à la tige 60 de façon à former des sous-ensembles en étoile espacés axialement le long de cette tige 60 et décalés angulairement entre eux, par exemple d'un pas de décalage angulaire constant.

Le lot 54 d'applicateurs 26 tel que représenté sur la figure 11 ou 12 peut être obtenu directement dans le réceptacle 38 de l'installation de fabrication 28.

La fabrication d'applicateurs 26 en lots 54 tels que représentés sur la figure 11 ou 12 facilite le transport de ces applicateurs jusqu'au lieu d'assemblage avec les autres éléments de l'emballage 20 de produit cosmétique.

Bien entendu, dans un même lot 54, les formes des applicateurs peuvent varier d'un applicateur à l'autre.

Parmi les avantages de l'invention, on notera que celle-ci permet de fabriquer des applicateurs de produis cosmétique de formes relativement complexes, dans des matériaux très divers élastiques, plastiques voire métalliques.

## Revendications

1. Applicateur (26) de produit cosmétique formant un élément d'un emballage (20) prêt à la commercialisation, l'applicateur (26) étant réalisé dans un matériau compatible avec le produit cosmétique et étant obtenu par un procédé au cours duquel
. on élabore un modèle numérique de l'applicateur (26),
. on conditionne le matériau sous une forme brute (40) pouvant s'écouler, et
. on solidifie le matériau sous forme brute par tranches définies à partir du modèle numérique,
l'applicateur comprenant une âme (46), de forme générale allongée le long d'un axe (X), portant des dents (48) venues de matière avec cette âme (46), ces dents (48) étant réparties en groupes (50), espacés axialement entre eux, et s'étendant chacune sensiblement parallèlement à un plan transversal de l'âme (46) suivant une direction courbe, les courbures des dents (48) s'inversant alternativement d'un groupe (50) à l'autre, chaque groupe comportant une seule dent, des couples de groupes étant chacun formé par deux groupes (50) de dents (48) se succédant et comprenant chacun un premier groupe et un deuxième groupe,
**caractérisé en ce que** des portions courbes des dents du premier groupe de chaque couple sont alignées avec les portions courbes des dents du premier groupe de chacun des autres couples suivant une première droite au niveau de l'âme (46), des portions courbes des dents du deuxième groupe de chaque couple sont alignées avec les portions courbes des dents du deuxième groupe de chacun des autres couples suivant une deuxième droite au niveau de l'âme (46), les première et deuxième droites étant distinctes l'une de l'autre et parallèles à l'axe (X).

2. Applicateur selon la revendication 1, dans lequel le matériau sous forme brute (40) comprend au moins un composant, mélangé le cas échéant avec un additif, ce composant étant choisi parmi une résine photopolymère, une résine de frittage, un métal et/ou un alliage de métaux.

3. Emballage de produit cosmétique comprenant un applicateur (26) de ce produit, **caractérisé en ce que** l'applicateur (26) est selon la revendication 1 ou la revendication 2.

## Patentansprüche

1. Applikator (26) für ein Kosmetikprodukt, der ein Element einer verbrauchsfertigen Verpackung (20) bildet, wobei der Applikator (26) aus einem Material hergestellt ist, das mit dem Kosmetikprodukt verträglich ist und mit einem Verfahren erhalten wird, bei dem
- ein digitales Modell des Applikators (26) erstellt wird,
- das Material in einer Rohform (40) konditioniert wird, die fließen kann, und
- das Material in Rohform in definierten Tranchen ausgehend von dem digitalen Modell verfestigt wird,
wobei der Applikator einen Kern (46) von entlang einer Achse (X) langgestreckter Grundform umfasst, der Zähne (48) trägt, die einstückig mit diesem Kern (46) sind, wobei diese Zähne (48) in Gruppen (50) verteilt sind, die axial untereinander beabstandet sind, und sich jeweils im Wesentlichen parallel zu einer Querebene des Kerns (46) entlang einer gekrümmten Richtung erstrecken, wobei die Krümmungen der Zähne (48) sich abwechselnd von einer Gruppe (50) zur anderen invertieren, wobei jede Gruppe einen einzigen Zahn beinhaltet, wobei Paare von Gruppen jeweils durch zwei Gruppen (50) von Zähnen (48) gebildet werden, die aufeinander folgen, und jeweils eine erste Gruppe und eine zweite Gruppe umfassen,
**dadurch gekennzeichnet, dass** gekrümmte Abschnitte der Zähne der ersten Gruppe jedes Paars mit den gekrümmten Abschnitten der Zähne der ersten Gruppe jedes der anderen Paare entlang einer ersten Geraden an dem Kern (46) fluchten, wobei gekrümmte Abschnitte der Zähne der zweiten Gruppe jedes Paars mit den gekrümmten Abschnitten der Zähne der zweiten Gruppe jedes der anderen Paare entlang einer zweiten Geraden an dem Kern (46) fluchten, wobei die ersten und zweiten Geraden voneinander verschieden und parallel zu der Achse (X) sind.

2. Applikator nach Anspruch 1, wobei das Material in Rohform (40) mindestens eine Komponente umfasst, die gegebenenfalls mit einem Zusatzstoff gemischt ist, wobei diese Komponente unter einem Photopolymerharz, einem Sinterharz, einem Metall und/oder einer Metalllegierung gewählt ist.

3. Verpackung für ein Kosmetikprodukt, die einen Applikator (26) für dieses Produkt umfasst, **dadurch gekennzeichnet, dass** der Applikator (26) ein Applikator nach Anspruch 1 oder Anspruch 2 ist.

## Claims

1. Cosmetic product applicator (26) forming an element of a packaging (20) ready for marketing, the applicator (26) being produced in a material compatible with the cosmetic product and being obtained by a method during which
• a digital model of the applicator (26) is created,
• the material is packaged in a raw form (40) that can flow, and
• the material in raw form is solidified by slices defined from the digital model,
the applicator comprising a core (46), of generally elongate form along an axis (X), bearing teeth (48) made of a piece with this core (46), these teeth (48) being divided into groups (50), spaced axially apart from one another, and each extending substantially parallel to a transverse plane of the core (46) in a curved direction, the curvatures of the teeth (48) being reversed alternately from one group (50) to the other, each group comprising a single tooth, pairs of groups being each formed by two groups (50) of teeth (48) in succession and each comprising a first group and a second group,
**characterized in that** curved portions of the teeth of the first group of each pair are aligned with the curved portions of the teeth of the first group of each of the other pairs along a first straight line at the level of the core (46), curved portions of the teeth of the second group of each pair are aligned with the curved portions of the teeth of the second group of each of the other pairs along a second straight line at the level of the core (46), the first and second straight lines being distinct from one another and parallel to the axis (X).

2. Applicator according to Claim 1, wherein the material in raw form (40) comprises at least one component, mixed if necessary with an additive, this component being chosen from among a photopolymer resin, a sintering resin, a metal and/or a metal alloy.

3. Cosmetic product packaging comprising an applicator (26) of this product, **characterized in that** the applicator (26) is according to Claim 1 or Claim 2.
